# FASCICULE DE BREVET EUROPEEN

(11) **EP 3 186 095 B1**
(45) Date de publication et mention de la délivrance du brevet: **31.10.2018**
(21) Numéro de dépôt: 15753107.0
(22) Date de dépôt: 16.07.2015
(51) Int. Cl.: B60B 27/00, B60B 35/00, B60B 35/02, B60B 35/04

(54) **PORTE MOYEU DE ROUE DE VEHICULE**
NABENTRÄGER FÜR FAHRZEUGRAD
HUB CARRIER FOR A VEHICLE WHEEL

(30) Priorité: 27.08.2014 FR 1458013
(43) Date de publication de la demande: 05.07.2017
(73) Titulaire: PSA Automobiles SA, 78300 Poissy (FR)
(72) Inventeur: POUILLAUDE, Eric, F-91400 Orsay (FR); LE DOUAIRON, Loic, F-91260 Juvisy sur Orge (FR)
(74) Mandataire: Rosenberg, Muriel Sylvie
(86) Numéro de dépôt international: PCT/FR2015/051951
(87) Numéro de publication internationale: WO 2016/030592

(56) Documents cités:
- DE-A1-102013 219 250
- DE-C1- 4 038 917
- US-A1- 2004 108 674
- US-B1- 6 398 240

## Description

La présente invention concerne un porte moyeu de roue de véhicule. Elle concerne en particulier, mais non exclusivement, un tel porte moyeu de roue pour un train arrière multi bras d'un véhicule automobile.

De manière classique, un véhicule automobile comprend un train roulant avant et un train roulant arrière. Chaque train comprend généralement une traverse ou un berceau reliant les deux côtés du véhicule, qui est fixé à la caisse du véhicule et qui supporte les roues de ce train. Les trains roulants assurent d'autres fonctions comme la suspension, le filtrage des vibrations, la direction du véhicule ou encore le freinage des roues.

Chaque roue du véhicule est reliée à son train roulant correspondant par une pièce dite « porte moyeu de roue » dans le présent texte, qui supporte la partie centrale de la roue ou « moyeu ».

Chaque train roulant de véhicule comporte des caractéristiques géométriques propres, telles la voie ou distance transversale entre les deux roues du train, la hauteur de ce train par rapport à l'axe de la roue, et l'angle de carrossage que forme dans un plan perpendiculaire à l'axe longitudinal du véhicule le plan de la roue avec la direction verticale.

Il est connu de développer différentes silhouettes de véhicules avec des hauteurs de caisse différentes sur une plateforme commune de fabrication automobile. Ainsi, sur une même plateforme peuvent être adaptés divers types de carrosserie répondant à des styles ou à des usages différents, qui comprennent, dès lors, des caractéristiques géométriques spécifiques différentes.

Il est également connu, pour avoir des hauteurs de caisse différentes, de jouer sur certains éléments de la suspension du véhicule, tels les ressorts, les amortisseurs ou les butées, ou bien de recourir à des entretoises placées entre la caisse du véhicule et les trains roulants.

De telles solutions techniques sont relativement lourdes et coûteuses, génèrent des « diversités » sur de nombreux composants, peuvent même nécessiter des composants nouveaux, des renforcements, et dans tous les cas imposent des mises au point et des validations spécifiques.

On a déjà cherché à réaliser des porte moyeux nouveaux, qui permettent d'obvier aux inconvénients précités et de réaliser certaines géométries de positionnement des roues.

Ainsi, on connaît, selon le document FR 2 949 997, un train roulant de véhicule automobile, comprenant deux roues supportées chacune par un pivot d'un porte moyeu, qui est différent suivant le côté droit ou gauche du véhicule et qui est relié à des suspensions de ce train. Les porte moyeux comprennent des dimensions donnant une certaine géométrie de positionnement des roues. Les deux porte moyeux droit et gauche peuvent être échangés entre eux pour être montés de l'autre côté du véhicule, et donner une géométrie de positionnement différente des roues de ce train. Lors de cet échange, chaque porte moyeu est retourné par rapport à un plan horizontal de façon à réaliser une inversion entre le haut et le bas de ce porte moyeu. Ce retournement de porte moyeu par rapport au plan horizontal entraîne, d'une part, un décalage de hauteur entre le centre du pivot et les éléments de suspension, et d'autre part, un double décalage d'angle entre l'axe du pivot et lesdits éléments de suspension du véhicule.

Un porte moyeu de roue de véhicule comprenant les caractéristiques du préambule de la revendication 1 est connu du document US 2004/108674 A1.

Le but de la présente invention est de fournir un porte moyeu de roue de véhicule, en particulier de véhicule automobile, qui permette de positionner les fonctions de l'axe de la roue à différentes hauteurs selon les besoins.

Un autre but de la présente invention est de fournir un tel porte moyeu de roue, qui permette ces différentes hauteurs de caisse sans modification des éléments de la suspension du train roulant.

Enfin, c'est aussi un but de la présente invention de fournir un tel porte moyeu de roue, qui soit de conception, de fabrication et de montage simples, qui soit robuste, fiable et économique, notamment en permettant lé réalisation, à partir d'un seul modèle de porte moyeu brut de fonderie, des porte moyeux de roue adaptables à des hauteur d'axe de roue multiples.

Pour parvenir à ces buts, la présente invention a pour objet un porte moyeu de roue de véhicule, qui est relié notamment à des éléments de suspension d'un train roulant du véhicule et qui présente la forme générale d'une plaque sensiblement plane prolongée de différentes extensions permettant la liaison du porte moyeu à divers éléments de suspension. La plaque comprend une surface externe plane sensiblement perpendiculaire à l'axe transversal du véhicule pour recevoir le moyeu d'une roue et un dégagement sensiblement central traversant l'épaisseur de ladite plaque pour le passage du roulement de moyeu. Selon le principe de la présente invention, le porte moyeu comporte, de plus, au moins deux alésages traversants, d'axes sensiblement parallèles à l'axe transversal du véhicule, destinés au passage de vis de fixation du porte moyeu sur le moyeu, lesdits alésages traversants étant usinés à des hauteurs déterminées en fonction de la hauteur de caisse désirée pour le véhicule, et par conséquent pouvant être, comme mentionné précédemment, différentes selon les besoins.

Le porte moyeu de roue selon l'invention comporte, de plus, un alésage traversant circulaire qui est réalisé dans ledit dégagement central, lequel alésage traversant circulaire est usiné à une hauteur déterminée en fonction de la hauteur de caisse désirée pour le véhicule et coordonnée avec la hauteur desdits alésages traversants des vis de fixation.

Selon un mode préféré de réalisation de l'invention, chaque alésage traversant de vis de fixation est usiné dans un bossage de la plaque constitutive du porte moyeu, le bossage étant réalisé lors de l'opération première de fonderie.

Selon un mode préféré de réalisation de l'invention également, chaque bossage de la plaque est de forme sensiblement oblongue d'axe longitudinal sensiblement vertical, de façon à permettre une hauteur variable de l'usinage de l'alésage traversant de vis de fixation (réalisé dans ce bossage) en fonction de la hauteur de caisse désirée pour le véhicule.

A titre d'exemple de réalisation non limitatif de l'objet et de la portée de la présente invention, les alésages traversants des vis de fixation peuvent être au nombre de 4 (quatre) disposés sensiblement deux à deux de part et d'autre du plan horizontal médian du dégagement central qui traverse l'épaisseur de la plaque pour le passage du roulement de moyeu.

Le porte moyeu de roue de l'invention peut avantageusement être réalisé en aluminium à partir d'une première étape de fonderie, la forme brute de fonderie étant ensuite usinée pour réaliser, notamment, les différents alésages traversants mentionnés ci-dessus. En variante, le porte moyeu selon l'invention peut être réalisé en fonte, ou en acier, ou bien en magnésium, ou bien encore en un matériau composite.

A titre d'exemple d'application, le porte moyeu de roue de l'invention peut être un porte moyeu pour un moyeu de roue qui intègre par sertissage le roulement de roue et l'axe de roue associés (porte moyeu dit « de troisième génération »).

La présente invention a également pour objet un train roulant de véhicule, par exemple un train roulant arrière multi bras de véhicule automobile, dans lequel un au moins des deux porte moyeux de roue, de droite et de gauche, est conforme à celui décrit ci-dessus dans ses grandes lignes.

Enfin, la présente invention a pour objet un véhicule, en particulier un véhicule automobile, qui présente au moins un train roulant conforme à celui mentionné et décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, d'un porte moyeu de roue de véhicule selon la présente invention, en l'état « brut de fonderie » avant les usinages de finition par enlèvement de matière,
- la figure 2 est une vue en perspective, schématique, du porte moyeu de la figure 1 après les usinages de finition par enlèvement de matière, lesquels usinages comprennent, notamment, la réalisation des alésages des vis de fixation du porte moyeu selon une géométrie d'axe de roue en position relativement haute,
- la figure 3 est une vue en perspective, schématique, du porte moyeu des figures 1 et 2 dans laquelle on a représenté les vis de fixation du porte moyen sur le moyeu de roue (non représenté), et
- la figure 4 est une vue en perspective, schématique, du porte moyeu des figures précédentes, mais avec des alésages des vis de fixation du porte moyeu selon une géométrie d'axe de roue en position relativement basse.

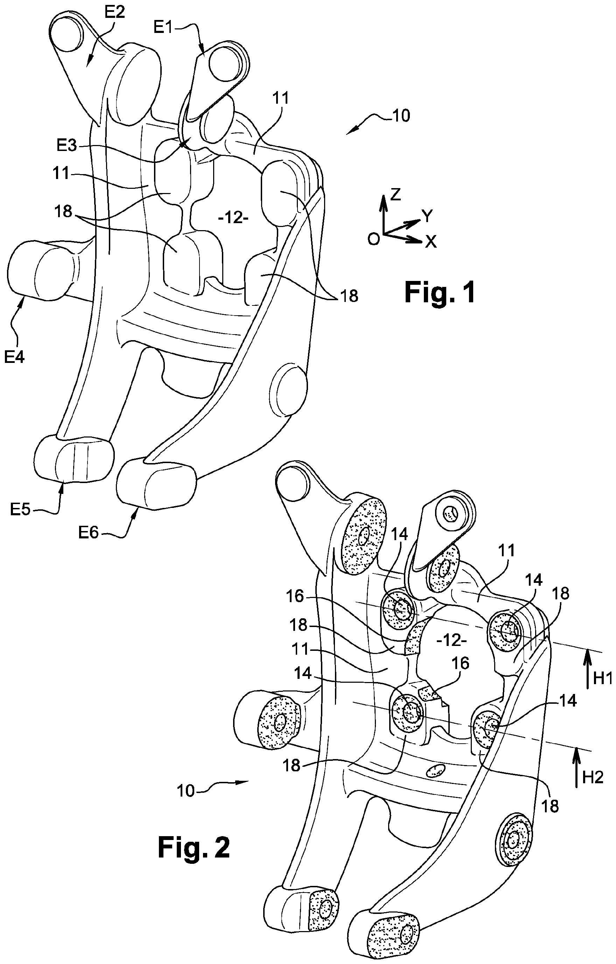

En référence au dessin de la figure 1, on a représenté un exemple de réalisation d'un porte moyeu selon la présente invention, en l'état « brut de fonderie », réalisé en aluminium, de référence générale 10. Ce porte moyeu 10 présente la forme générale d'une plaque sensiblement plane, de référence 11, prolongée par différentes extensions ou pattes de liaison E1 à E6 permettant la liaison du porte moyeu à divers éléments de suspension du véhicule, notamment. A titre d'exemple non limitatif de l'objet et de la portée de la présente invention, l'extension E1 permet la liaison avec la biellette de barre anti-roulis, E2 et E3 avec le triangle de suspension, E4 avec la biellette de pince, E5 et E6 avec la chape de l'amortisseur.

Dans la partie centrale de la plaque 11, est prévu un dégagement traversant, de référence 12, permettant de laisser de la place pour le passage de l'arrière du roulement associé au moyeu de la roue du véhicule.

La plaque 11 comprend également une surface externe plane (opposée à la surface représentée sur les figures), sensiblement perpendiculaire à l'axe transversal en « Y » du véhicule, destinée à recevoir le moyeu d'une roue, plus particulièrement, dans le présent exemple de réalisation, un moyeu de roue qui intègre par sertissage le roulement de roue et l'axe de roue associés (moyeu de roue dit « de troisième génération »).

Enfin la plaque 11, comme montré sur le dessin de la figure 1, présente quatre bossages, de référence collective 18, situés deux à deux au dessus et au dessous, respectivement, d'un plan horizontal médian du dégagement central 12. Ces bossages 18 sont de forme sensiblement oblongue d'axe longitudinal sensiblement vertical pour des raisons expliquées plus loin dans le présent texte.

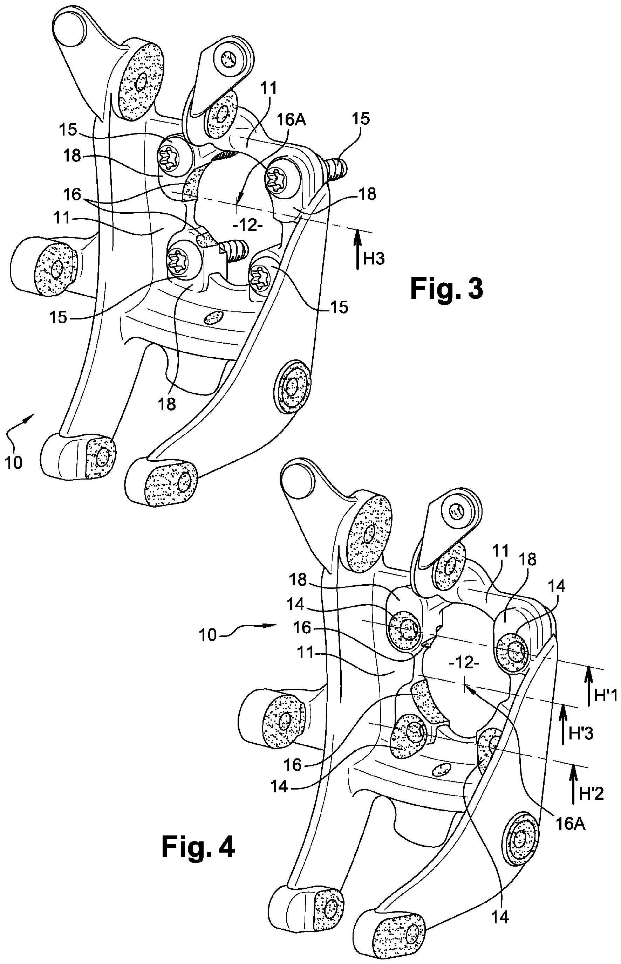

En référence au dessin de la figure 2, le porte moyeu 10 est ensuite usiné en différents emplacements de liaison (les parties usinées sont représentés en pointillés sur la figure 2). Ce porte moyeu 10 comporte, en particulier, quatre alésages traversants, référencés collectivement 14, d'axes sensiblement parallèles à l'axe transversal en « Y » du véhicule. Ces alésages sont destinés au passage de vis de fixation (représentés sur la figure 3 et référencés collectivement 15) pour la fixation du porte moyeu 10 sur le moyeu. Ces alésages traversants 14 sont usinés à des hauteurs H1, H2, qui sont déterminées en fonction de la hauteur de caisse désirée pour le véhicule. De plus, des usinages sensiblement semi sphériques sont prévus à l'entrée de chaque alésage traversant 14 pour permettre le positionnement d'une vis de fixation 15 à tête sphérique (figure 3).

Conformément au principe même de la présente invention, les hauteurs H1 et H2 peuvent être différentes sur des modèles de véhicule différents. Ces hauteurs H1, H2 peuvent être déterminées en fonction de la hauteur souhaitée de la caisse du véhicule. On a ainsi représenté, sur le dessin de la figure 4, une réalisation de porte moyeu 10 similaire à celle des figures précédentes, mais avec des hauteurs H'1 et H'2 inférieures à H1, respectivement H2, de façon à réaliser une variante du porte moyeu 10 à axe bas, c'est-à-dire une variante selon laquelle les fonctions de l'axe de roue sont positionnées à une « altitude » inférieure.

A titre d'exemple, cette différence « d'altitude » résultant de positionnements verticaux différents des alésages traversants 14 dans les bossages 18 peut atteindre une distance de l'ordre de 15 mm, et cela sans modifier quoi que ce soit dans les éléments de suspension du véhicule liés au porte moyeu 10.

Comme montré sur les figures 2 et 4, un alésage traversant circulaire, de référence numérique 16, est réalisé dans le dégagement central 12. Cet alésage traversant circulaire 16 est usiné à une hauteur (représentée par la hauteur H3 de son axe central 16A sur la figure 3) déterminée en fonction de la hauteur de caisse désirée pour le véhicule et coordonnée avec la hauteur des alésages traversants 14 des vis de fixation 15. Ainsi, sur le dessin des figures 2 et 3, l'alésage traversant circulaire 16 de hauteur H3 correspond au porte moyeu usiné axe haut, tandis que sur le dessin de la figure 4, il est de hauteur H'3, inférieure à H3, correspond au porte moyeu 10 usiné axe bas.

En variante de l'exemple de réalisation de porte moyeu décrit ci-dessus, le nombre de bossages 18 et, par conséquent le nombre d'alésages traversants 14 correspondants pour vis de fixation 15, peut être différent de quatre. Par exemple, le porte moyeu 10 peut avoir seulement deux alésages traversants 14 et donc deux vis de fixation 15 seulement, qui sont alors disposées autour du dégagement central 12 et séparées angulairement de 180°. Selon un autre exemple, le porte moyeu 10 peut avoir seulement trois alésages traversants 14 et donc trois vis de fixation 15, qui sont alors disposées autour du dégagement central 12 et séparées angulairement d'un pas angulaire de 120°. Selon d'autres exemples de réalisation non décrits en détails, le porte moyeu 10 peut comporter plus de quatre vis de fixation 15, par exemple cinq, six ou même un nombre de vis de fixation 15 et d'alésages traversants 14 correspondants de dix ou plus.

Il va de soi que l'invention ne se limite pas au cas d'un porte moyeu pour moyeu dit « de troisième génération », comme mentionné dans l'exemple décrit ci-dessus, mais peut s'appliquer à un porte moyeu pour moyeu dit « de deuxième génération ».

Le porte moyeu de roue de véhicule décrit ci-dessus de façon détaillée dans une de ses variantes de réalisation non limitative de l'objet et de la portée de l'invention présente de nombreux avantages, parmi lesquels les avantages suivants :
- il constitue une solution technique qui remplace avantageusement les solutions relativement complexes, connues de l'art antérieur, telles que, par l'exemple, l'entretoisement déjà mentionné précédemment entre la caisse et les trains roulants du véhicule,
- il permet de rehausser un véhicule d'une hauteur voisine ou de l'ordre de 15 mm sans modifier quoi que ce soit sur les éléments de suspension du véhicule,
- il permet, à partir d'une seule référence de pièce brute de fonderie, de réaliser des porte moyeux à hauteurs d'axe de roue multiples, et
- il est fiable, robuste et économique.

## Revendications

1. Porte moyeu de roue de véhicule, qui est relié notamment à des éléments de suspension d'un train roulant du véhicule et qui présente la forme générale d'une plaque (11) sensiblement plane prolongée par différentes extensions (E1 à E6) de liaison auxdits éléments de suspension, ladite plaque (11) comprenant une surface externe plane sensiblement perpendiculaire à l'axe transversal (« Y ») du véhicule pour recevoir le moyeu d'une roue et un dégagement (12) sensiblement central, traversant l'épaisseur de ladite plaque (11), pour le passage du roulement de moyeu, ledit porte moyeu (10) comportant, de plus, au moins deux alésages traversants (14), d'axes sensiblement parallèles à l'axe transversal (« Y ») du véhicule, destinés au passage de vis de fixation (15) du porte moyeu (10) sur le moyeu, chaque alésage traversant (14) de vis de fixation (15) étant usiné dans un bossage (18) de la plaque (11), ledit porte moyeu étant **caractérisé en ce que** chaque bossage (18) de la plaque (11) est de forme sensiblement oblongue d'axe longitudinal sensiblement vertical, de façon à permettre une hauteur variable de l'usinage de l'alésage traversant (14) de vis de fixation (15) en fonction de la hauteur de caisse désirée pour le véhicule.

2. Porte moyeu de roue de véhicule selon la revendication 1, **caractérisé en ce qu'**il comporte, de plus, un alésage traversant circulaire (16) qui est réalisé dans ledit dégagement central (12), lequel alésage traversant circulaire (16) est usiné à une hauteur déterminée en fonction de la hauteur de caisse désirée pour le véhicule et coordonnée avec la hauteur desdits alésages traversants (14) des vis de fixation (15).

3. Porte moyeu de roue selon la revendication 1 ou 2, **caractérisé en ce que** les alésages traversants (14) des vis de fixation (15) sont au nombre de 4 (quatre) disposés sensiblement deux à deux de part et d'autre du plan horizontal médian du dégagement sensiblement central (12), traversant l'épaisseur de la plaque (11), pour le passage du roulement de moyeu.

4. Porte moyeu de roue selon l'une quelconque des revendications 1 à 3, **caractérisé en ce qu'**il est réalisé en aluminium à partir d'une première étape de fonderie, la forme brute de fonderie étant ensuite usinée pour réaliser les différents alésages.

5. Porte moyeu de roue selon l'une quelconque des revendications 1 à 4, caractérisé ce qu'il est un porte moyeu pour un moyeu de roue qui intègre par sertissage le roulement de roue et l'axe de roue associés.

6. Train roulant de véhicule, **caractérisé en ce que** l'un au moins des deux porte moyeux (10), de droite et de gauche, est conforme à l'une quelconque des revendications 1 à 5.

7. Train roulant de véhicule selon la revendication 6, **caractérisé en ce qu'**il est un train roulant arrière multi bras.

8. Véhicule, en particulier véhicule automobile, **caractérisé en ce qu'**il présente au moins un train roulant conforme à l'une quelconque des revendications 6 et 7.

## Patentansprüche

1. Nabenträger für Fahrzeugrad, der insbesondere mit Aufhängungselementen eines Fahrwerks des Fahrzeugs verbunden ist und die allgemeine Form einer Platte (11), die im Wesentlichen eben ist, aufweist, die von unterschiedlichen Erweiterungen (E1 bis E6) zur Verbindung mit den Aufhängungselementen verlängert ist, wobei die Platte (11) eine externe ebene Oberfläche umfasst, die im Wesentlichen zu der Querachse ("Y") des Fahrzeugs senkrecht ist, um die Nabe eines Rads aufzunehmen, und eine im Wesentlichen zentrale Aussparung (12), die die Stärke der Platte (11) durchquert, für das Durchgehen des Nabenlagers, wobei der Nabenträger (10) außerdem mindestens zwei durchgehende Bohrungen (14) mit Achsen, die im Wesentlichen zu der Querachse ("Y") des Fahrzeugs parallel sind, umfasst, die zum Durchgehen von Befestigungsschrauben (15) des Nabenträgers (10) auf der Nabe bestimmt sind, wobei jede durchgehende Bohrung (14) für Befestigungsschraube (15) in einen Höcker (18) der Platte (11) gearbeitet ist, Nabenträger **dadurch gekennzeichnet, dass** jeder Höcker (18) der Platte (11) im Wesentlichen längliche Form mit im Wesentlichen senkrechter Längsachse hat, so dass eine variable Höhe der Bearbeitung der durchgehenden Bohrung (14) für Befestigungsschraube (15) in Abhängigkeit von der Karosseriehöhe, die für das Fahrzeug gewünscht wird, erlaubt wird.

2. Nabenträger für Fahrzeugrad nach Anspruch 1, **dadurch gekennzeichnet, dass** er außerdem eine kreisförmige durchgehende Bohrung (16) umfasst, die in der zentralen Aussparung (12) hergestellt wird, wobei die kreisförmige durchgehende Bohrung (16) in einer Höhe gearbeitet ist, die in Abhängigkeit von der Karosseriehöhe, die für das Fahrzeug gewünscht wird, bestimmt und mit der Höhe der durchgehenden Bohrungen (14) der Befestigungsschrauben (15) koordiniert ist.

3. Nabenträger für Rad nach Anspruch 1 oder 2, **dadurch gekennzeichnet, dass** es 4 (vier) durchgehende Bohrungen (14) der Befestigungsschrauben (15) gibt, die im Wesentlichen zu je zwei auf jeder Seite der mittleren horizontalen Ebene der im Wesentlichen zentralen Aussparung (12) angeordnet sind, wobei sie die Stärke der Platte (11) für das Durchgehen des Nabenlagers durchqueren.

4. Nabenträger nach einem der Ansprüche 1 bis 3, **dadurch gekennzeichnet, dass** er aus Aluminium ausgehend von einem ersten Gießereischritt hergestellt ist, wobei der Gießereirohling anschließend bearbeitet wird, um die unterschiedlichen Bohrungen herzustellen.

5. Nabenträger nach einem der Ansprüche 1 bis 4, **dadurch gekennzeichnet, dass** er ein Nabenträger für eine Radnabe ist, der durch Falzen das Radlager und die Radachse, die miteinander assoziiert sind, integriert.

6. Fahrzeugfahrwerk, **dadurch gekennzeichnet, dass** der mindestens eine der zwei Nabenträger (10) rechts und links einem beliebigen der Ansprüche 1 bis 5 entspricht.

7. Fahrzeugfahrwerk nach Anspruch 6, **dadurch gekennzeichnet, dass** es ein mehrschenkeliges Hinterradfahrwerk ist.

8. Fahrzeug, insbesondere Kraftfahrzeug, **dadurch gekennzeichnet, dass** es mindestens ein Fahrwerk nach einem der Ansprüche 6 und 7 umfasst.

## Claims

1. A hub carrier for a vehicle wheel, which is connected in particular to suspension elements of a running gear of the vehicle and which has the general form of a substantially planar plate (11) which is extended by different extensions (E1 to E6) for connecting to said suspension elements, said plate (11) including a planar external surface substantially perpendicular to the transverse axis ("Y") of the vehicle for receiving the hub of a wheel and a substantially central through-opening (12), passing through the thickness of said plate (11), for the passage of the hub bearing, said hub carrier (10) comprising, in addition, at least two through-bores (14), having axes substantially parallel to the transverse axis ("Y") of the vehicle, intended for the passage of screws (15) for attaching the hub carrier (10) on the hub, each through-bore (14) of attachment screw (15) being machined in a boss (18) of the plate (11), said hub carrier being **characterized in that** each boss (18) of the plate (11) is of substantially oblong shape with substantially vertical longitudinal axis, so as to permit a variable height of machining of the through-bore (14) of attachment screw (15) as a function of the desired height of the body for the vehicle.

2. The hub carrier for a vehicle wheel according to Claim 1, **characterized in that** it comprises, in addition, a circular through-bore (16) which is formed in said central through-opening (12), which circular through-bore (16) is machined at a predetermined height as a function of the desired height of the body for the vehicle and coordinated with the height of said through-bores (14) of the attachment screws (15).

3. The hub carrier for a wheel according to Claim 1 or 2, **characterized in that** the through-bores (14) of the attachment screws (15) are 4 (four) in number, disposed substantially two by two on either side of the median horizontal plane of the substantially central through-opening (12), passing through the thickness of the plate (11), for the passage of the hub bearing.

4. The hub carrier for a wheel according to any one of Claims 1 to 3, **characterized in that** it is made of aluminium from a first casting step, the raw casting form then being machined to create the different bores.

5. The hub carrier for a wheel according to any one of Claims 1 to 4, **characterized in that** it is a hub carrier for a wheel hub which integrates by crimping the associated wheel bearing and the wheel axle.

6. A vehicle running gear, **characterized in that** at least one of the two hub carriers (10), right and left, is in accordance with any one of Claims 1 to 5.

7. The vehicle running gear according to Claim 6, **characterized in that** it is a multi-arm rear running gear.

8. A vehicle, in particular a motor vehicle, **characterized in that** it has at least one running gear in accordance with any one of Claims 6 and 7.
